# EUROPÄISCHE PATENTSCHRIFT

(11) **EP 0 536 584 B1**
(45) Veröffentlichungstag und Bekanntmachung des Hinweises auf die Patenterteilung: **03.06.1998**
(21) Anmeldenummer: 92116173.3
(22) Anmeldetag: 22.09.1992
(51) Int. Cl.: B32B 18/00, B32B 9/00, B28B 19/00

(54) **Verfahren zur Herstellung eines Verbundwerkstoffs aus mindestens zwei Schichten**
Process for the production of a composite material comprising at least two layers
Procédé de préparation d'un matériau composite comprenant au moins deux couches

(30) Priorität: 11.10.1991 DE 4133712
(43) Veröffentlichungstag der Anmeldung: 14.04.1993
(73) Patentinhaber: DYKO INDUSTRIEKERAMIK GMBH, D-40521 Düsseldorf (DE)
(72) Erfinder: Goerenz, Edmund, D-52477 Alsdorf (DE); Rymon-Lipinski, Tadeusz, Dr., D-53125 Bonn (DE)
(74) Vertreter: Rehberg, Elmar, Dipl.-Ing.

(56) Entgegenhaltungen:
- EP-A- 441 528
- EP-A- 0 036 435
- DE-A- 3 333 158
- FR-A- 1 271 493
- US-A- 3 977 294

## Beschreibung

Die Erfindung bezieht sich auf ein Verfahren zur Herstellung eines Verbundwerkstoffs aus mindestens zwei Schichten, von denen mindestens eine Schicht aus keramischer Masse besteht, in dem die Roh- und Zuschlagsstoffe für die Schicht aus keramischer Masse angefeuchtet, gemischt und zu einer Grünschicht gepreßt werden, an der Grünschicht schwache Grenzflächen gebildet werden und die Schichten des Verbundwerkstoffs zusammengepreßt werden, wonach der Verbundwerkstoff durch Trocknen und Brennen gestaltverfestigt wird.

Bedingt u. a. durch die Sprödigkeit keramischer Werkstoffe ist der Einsatz von keramischen Bauteilen aus solchen Werkstoffen eingeschränkt. Es kommt daher in besonderem Maße auf die Verbesserung vor allem der mechanischen Eigenschaften wie Festigkeit, Zähigkeit, günstigeres Bruchverhalten usw. an.

Aus der Zeitschrift Nature, vol. 347, Nr. 6292, Seiten 455 bis 457, 4. Oktober 1990 "A simple way to make tough ceramics" oder der EP-A-0 441 528 ist ein Verfahren der eingangs beschriebenen Art bekannt. Dabei wird ein Verbundwerkstoff geschaffen, in dem zunächst aus keramischer Masse relativ dünne Abschnitte gepreßt werden. Diese Abschnitte werden mit schwachen Grenzflächen gebildet, indem sie mit Zwischenschichten aus Graphit überzogen bzw. in Verbindung gebracht werden. Die auf diese Art und Weise mit den schwachen Grenzflächen ausgestatteten einzelnen Schichten werden aufeinandergestapelt und zu einem Verbundwerkstoff zusammengepreßt. In Verbindung zu monolithisch aufgebauten Werkstoffen ist die Bruchfestigkeit 4fach verbessert und die Brucharbeit ist mehr als 100fach größer als bei monolithischen Erzeugnissen.

Die Verbesserung der Bruchzähigkeit durch die Ausbildung und Anordnung von schwachen Grenzflächen zwischen den einzelnen Schichten eines Verbundwerkstoffs zielt darauf ab, die Fortpflanzung von Rissen quer zur Haupterstreckungsebene eines Verbundwerkstoffs an jeder schwachen Grenzfläche zu stoppen bzw. umzulenken. Die zugehörigen Grundlagen sind in Refractory Materials vol. 3 "Ceramic fibers and fibrous composite materials", Rauch, Sutton und Mc Creight, Academic Press, New York und London 1968 im Einzelnen beschrieben.

Aus der US-A-30 07 222 ist ein Verfahren zur kontinuierlichen Herstellung von blattförmigem, keramischem Material bekannt, insbesondere in Form von Fliesen, Wärmeschutzschichten u. dgl.. So wird beispielsweise der Grundkörper einer Fliese durch Walzen der keramischen Masse verfestigt. Zur Bildung einer Glasurschicht wird eine weitere Masse zwischen zwei Walzen in deren Walzspalt verdichtet und die beiden so gebildeten Schichten werden über eine weitere Walze mit geringem Anpreßdruck zusammengeführt. Dabei geht es jedoch nicht um die Herstellung eines Verbundwerkstoffs mit verbesserter Bruchzähigkeit, sondern es soll eine möglichst feste und dauerhafte Verbindung zwischen den Schichten erreicht werden. Der keramische Werkstoff für die den Grundkörper der Fliese bildende Schicht wird auf eine Feuchtigkeit zwischen 8 und 15 Gew.-% eingestellt, wobei die Korngröße unter 75 µ liegt.

Der Erfindung liegt die Aufgabe zugrunde, ein Verfahren der eingangs beschriebenen Art aufzuzeigen, mit dem ein Verbundwerkstoff mit verbesserter Bruchzähigkeit auf einfachere Weise herstellbar ist als bisher.

Erfindungsgemäß wird dies dadurch erreicht, daß die Grünschicht zur Bildung der schwachen Grenzflächen durch Walzen verdichtet und im Bereich ihrer Oberflächen texturiert wird, und daß das Zusammenpressen der Schichten des Verbundwerkstoffs durch einen weiteren Walzvorgang erfolgt. Wesentlich für das neue Verfahren ist es, daß die Aufbringung der Graphit-Zwischenschichten völlig in Fortfall kommt und das Walzen mindestens einer eingesetzten keramischen Schicht im Verbundwerkstoff dazu ausgenutzt wird, um an der einzelnen Schicht die schwachen Grenzflächen zu erzeugen bzw. vorzubilden. Die schwachen Grenzflächen entstehen infolge der durch die Tätigkeit der Walzen hervorgerufenen Texturierung des Materials. Bei Zusammenfügen der einzelnen Schichten des Verbundwerkstoffs durch den weiteren Walzvorgang werden diese schwachen Grenzschichten nicht beeinträchtigt, sondern bleiben erhalten. Diese so erzeugten schwachen Grenzschichten bewirken eine Umlenkung bzw. ein Abstoppen von Rissen im Verbundwerkstoff bei entsprechender Beanspruchung, ohne daß der Verbundwerkstoff durch die Anwesenheit von GraphitZwischenschichten belastet wird. Der neue Verbundwerkstoff kann insoweit nicht nur in dünneren Schichten hergestellt werden als im Stand der Technik, sondern es sind ohne Weiteres auch solche Schichtaufbauten möglich, bei denen eine Graphit-Zwischenschicht nicht zulässig ist. Das Walzen der keramischen Schicht oder der keramischen Schichten stellt schließlich einen sehr preiswerten Herstellungsschritt dar, ohne daß zusätzliches Material in den Verbundwerkstoff eingetragen wird. Das Walzen eröffnet zugleich ein kontinuierliches Herstellverfahren, während im Stand der Technik das Pressen der einzelnen Schichten als ein intermittierendes Verfahren zu verstehen ist. Beim Zusammenpressen der Schichten des Verbundwerkstoffs können vorteilhaft vergleichsweise niedrige Preßdrücke beim Walzvorgang eingesetzt werden, die lediglich so bemessen sein müssen, daß der Zusammenhalt der einzelnen Schichten im Verbundwerkstoff erreicht wird.

Die keramische Masse der Grünschicht kann vorteilhaft mit einer Feuchtigkeit von 0 bis 15 Gew.-% - vorzugsweise von 0,5 bis 8 Gew.-% - eingestellt werden. Es wird dabei ein möglichst trockenes Walzen der Grünschicht bzw. der die Grünschicht bildenden keramischen Masse angestrebt, weil sich überraschenderweise gezeigt hat, daß es zur Ausbildung der schwachen Grenzflächen keiner besonders hohen Feuchtigkeitsgehalte während des Walzen bedarf.

Die keramische Masse kann mit einem Schüttgewicht von mindestens 1,3 g/cm³ bei einer Körnung von 0 ... 1 mm eingesetzt werden. Je höher das Schüttgewicht ist, desto besser ist die Verdichtungswirkung der Schicht beim Walzen.

Die Grünschicht kann mit einem höheren Preßdruck gewalzt werden, als er beim Zusammenpressen der Schichten zu dem Verbundwerkstoff Anwendung findet. Damit wird sichergestellt, daß die beim Walzen der einzelnen Schichten entstandenen schwachen Grenzflächen beim Zusammenfügen zum Verbundwerkstoff nicht beschädigt oder anderweitig beeinträchtigt werden.

Vorteilhaft ist es möglich, eine Mehrzahl Grünschichten, die auf die beschriebene Art und Weise hergestellt sind, zusammenzuführen, wobei es möglich ist, Schichten gleichen Materials und/oder Schichten unterschiedlichen Materials zusammenzubringen. Damit sind spezielle Effekte und Eigenschaften erreichbar. Bei Verwendung von Schichten aus verschiedenen Materialien ist es beispielsweise möglich, an sich korrosionsempfindliche Schichten im Innern des Schichtenaufbaus des Verbundwerkstoffs anzuordnen, während Schichten, die rein aus keramischer Masse bestehen und insoweit nicht korrosionsanfällig sind, auf der Außenseite als Deckschichten plaziert werden können.

Das Zusammenfügen der Schichten kann unter Schichtdickenverringerung stattfinden. Diese Schichtdickenverringerung ergibt sich infolge des Pressens beim weiteren Walzvorgang, jedoch so, daß die schwachen Grenzflächen nicht beeinträchtigt werden.

Es ist auch möglich, eine Schicht aus einer Metallfolie, aus einem Gewebe oder aus Fasern in den Verbundwerkstoff einzubringen, also zusätzlich zu mindestens einer Schicht aus keramischer Masse einzusetzen. Je nach dem Anbringungsort dieser zusätzlichen Schichten sind unterschiedliche Eigenschaften des Verbundwerkstoffs erzielbar. Als Fasern finden vorzugsweise Endlosfasern Verwendung, die durch den Verfahrensschritt des Walzens besonders vorteilhaft eingebracht werden können.

Es ist auch möglich, eine Mehrzahl von Grünschichten aus zwei Komponenten zu verwenden, die in einem solchen Aufbau zusammengefügt werden, daß sich schichtweise die eine Komponente in ihrem mengenmäßigen Anteil verringert, während gleichzeitig sich der Anteil der anderen Komponente mengenmäßig erhöht. Auf diese Art und Weise werden benachbarte Schichten geschaffen, die sich z. B. auch hinsichtlich ihres Wärmeausdehnungsverhaltens ähnlich verhalten, so daß auf diesem Weg letztlich auch zwei Komponenten zusammengefügt werden können, die ein sehr unterschiedliches Wärmeausdehnungsverhalten besitzen. Auch hierbei wird von der Bildung von schwachen Grenzflächen durch das Walzen der einzelnen Schichten Gebrauch gemacht. Somit ergibt sich auch hierbei ein in seiner Bruchzähigkeit verbesserter Verbundwerkstoff.

Es ist möglich, das Zusammenpressen der Schichten des Verbundwerkstoffs bei erhöhter Temperatur durchzuführen. Hier können Temperaturen oberhalb 100°C, beispielsweise in der Größenordnung von 400°C, zur Einwirkung gebracht werden. Damit erhalten die einzelnen Schichten beim Walzen eine gewisse Plastizität, die die Ausbildung der schwachen Grenzschichten und das nachfolgende Zusammenpressen der Schichten zum Verbundwerkstoff verbessert.

Eine besonders vorteilhafte Herstellung ergibt sich, wenn die Schicht des Grünkörpers aufgewickelt, durch einen Schnitt unterteilt und die so gebildeten Schichtabschnitte durch Walzen zusammengepreßt werden. Es versteht sich, daß bei einem solchen Aufbau eine Vielzahl gleich dicker und aus gleichem Werkstoff bestehender Schichten zum Verbundwerkstoff zusammengefügt werden.

In allen Fällen wird durch das Walzen der Einzelschichten zugleich auch eine Texturierung im Bereich der schwachen Oberflächen der Schichten erreicht. Auch diese Ausrichtung zielt auf die Rißumlenkung und die Verbesserung der Bruchzähigkeit ab.

Die Erfindung wird anhand der Zeichnungen sowie einiger Ausführungsbeispiele weiter erläutert und beschrieben. Es zeigen:
- Figur 1: eine schematische Darstellung der Herstellung eines Verbundwerkstoffs aus drei Schichten,
- Figur 2: die Verdeutlichung der Bildung einer Mehrzahl von Schichten durch Aufwickeln und
- Figur 3: eine Draufsicht auf eine durchbrochene Metallfolie, die als Schicht Bestandteil der Verbundfolie wird.

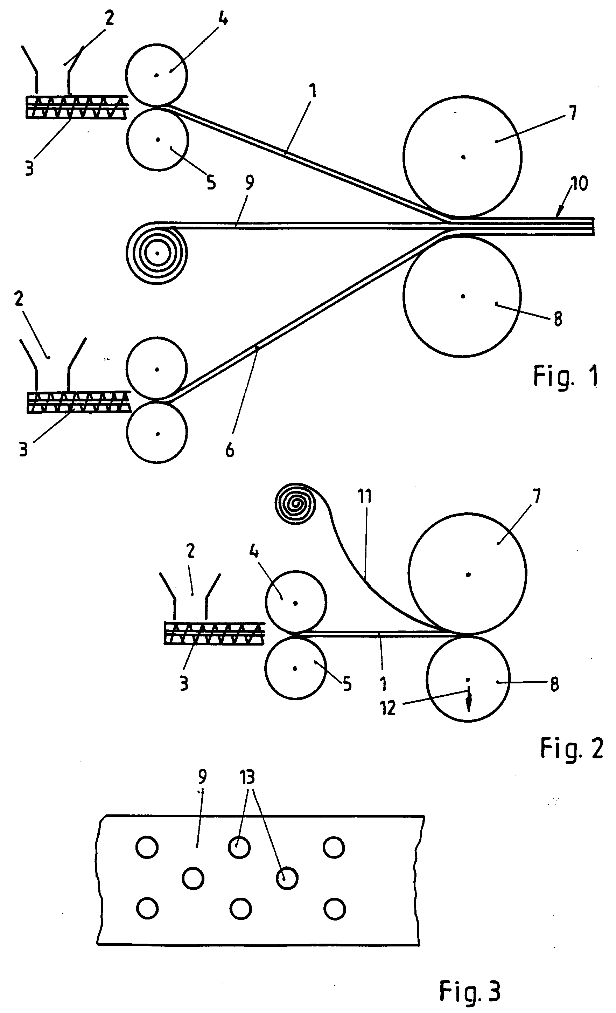

In Figur 1 wird zunächst eine erste Schicht 1 in Form eines Al₂O₃-Bands gebildet. Zu diesem Zweck wird das entsprechend angefeuchtete keramische Material in einen Einfülltrichter 2 eingebracht und mit Hilfe einer Förderschnecke 3 dem Spalt eines aus Walzen 4 und 5 gebildeten Walzspalts zugeführt. In diesem Walzspalt findet durch den Walzvorgang eine Verdichtung der keramischen Masse statt, wobei hierdurch die schwachen Grenzflächen gebildet werden.

Eine Schicht 6, die ebenfalls in gleicher Weise wie die Schicht 1 hergestellt und durch einen Walzvorgang erzeugt wird, wird ebenfalls dem Walzspalt einer weiteren Walzvorrichtung aus Walzen 7 und 8 zugeführt. Eine Metallfolie 9 gelangt als Mittellage zwischen die beiden Schichten 1 und 6. Im Walzspalt der Walzen 7 und 8 werden die Schichten 1 und 6 sowie die Metallfolie 9 aufeinandergepreßt und dabei zusammengeführt, so daß ein Verbundwerkstoff 10 in Bandform entsteht, der kontinuierlich hergestellt werden kann und entsprechend in Einzelabschnitte abgelängt und einer Weiterverarbeitung zugeführt werden kann. Diese umfaßt in der Regel einen üblichen Trocken- und Brennvorgang.

Obwohl in Figur 1 die Anwendung zweier Schichten 1 und 6 aus keramischem Werkstoff aufgezeigt ist, versteht es sich, daß die Anzahl der Schichten auch vergleichsweise groß werden kann, die zu einem Verbundwerkstoff 10 zusammengeführt werden. Es ist durchaus möglich, z. B. 30 solcher Schichten zu einem Verbundwerkstoff 10 zu vereinigen. Die einzelnen Schichten können aus gleichem oder ungleichem Material hergestellt werden.

Figur 2 verdeutlicht eine einfache Herstellungsmöglichkeit, wenn es darum geht, mehrere Schichten gleichen Materials zusammenzubringen. Die Schicht 1 wird zunächst so erzeugt, wie dies auch anhand der Figur 1 beschrieben wurde. Zusätzlich kann eine Gewebebahn 11, z. B. aus Kohlenstoffasern, von der Rolle abgezogen und gemeinsam mit der Schicht 1 dem Spalt der weiteren Walzvorrichtung aus den Walzen 7 und 8 zugeführt werden. Dabei wird die Walze 8 beweglich ausweichend in Richtung eines Pfeils 12 gelagert bzw. in ihrer Bewegung gesteuert, so daß die Bahn 1 und die Gewebebahn 11 gemeinsam auf die Walze 7 aufgewickelt werden können. Wenn die entsprechende Anzahl der Windungen erreicht ist, kann die aufgewickelte Bahn durch einen Schnitt in radialer Richtung zur Walze 7 in eine Vielzahl bzw. Mehrzahl Einzelabschnitte unterteilt werden. Je nachdem, wie der Anpreßdruck zwischen den Walzen 7 und 8 eingestellt ist, ist dabei gleichzeitig auch schon der Verbund durch den weiteren Walzvorgang erreicht oder aber die durch den Schnitt gebildeten Abschnitte werden noch einmal gesondert durch einen Walzspalt geführt, um den Zusammenhalt der Schichten im Verbundwerkstoff zu erreichen.

Figur 3 zeigt eine Draufsicht auf eine Metallfolie 9, bei der über die Fläche verteilt Lochungen 13 vorgesehen sind, so daß an diesen Stellen mehrere Schichten, beispielsweise die Schichten 1 und 6, direkt miteinander in Verbindung treten, wenn der zweite Walzvorgang zum Verbundwerkstoff stattfindet.

Im Nachfolgenden werden noch einige Beispiele aufgezeigt, die die Abwandlungsmöglichkeiten des erfindungsgemäßen Verfahrens und die Möglichkeiten der Anpassung an verschiedene Anforderungen aufzeigen:

### Beispiel 1:

Um einen Verbundwerkstoff aufzuzeigen, der im Bereich seiner einen Oberfläche eine Schicht aus reinem keramischem Werkstoff aufweist und an seiner anderen Oberfläche eine rein metallische Schicht besitzt, können sechs Schichten 1 bzw. 6 jeweils durch einen Walzvorgang hergestellt und mit den schwachen Grenzflächen versehen werden, bei dem über die Werkstoffdicke des Verbundwerkstoffs die einzelnen Schichten aus den nachfolgend aufgeführten Komponenten zusammengesetzt sind:
100 % Al₂O₃ + 0 % Stahlpulver
80 % Al₂O₃ + 20 % Stahlpulver
60 % Al₂O₃ + 40 % Stahlpulver
40 % Al₂O₃ + 60 % Stahlpulver
20 % Al₂O₃ + 80 % Stahlpulver
0 % Al₂O₃ + 100 % Stahlpulver
Diese sechs Schichten werden in einem weiteren Walzvorgang zu dem Verbundwerkstoff zusammengewalzt, wobei ein Walzdruck von 80 t Anwendung findet und auf diese Art und Weise Platten mit Abmessungen von 50 x 50 mm² herstellbar sind. Durch Trocknen und Brennen in Argonatmosphäre entsteht der fertige Verbundwerkstoff.

### Beispiel 2:

Aus einem Al₂O₃-Pulver werden in einer ersten Walzanlage Platten mit den Abmessungen 50 x 1 x 500 mm³ gewalzt, wobei dabei bereits ein Walzdruck von 80 t zur Einwirkung gebracht wird. 16 derartig hergestellte Platten werden aufeinandergestapelt und in einer weiteren Walzanlage zu dem Verbundwerkstoff bzw. der Platte aus Verbundwerkstoff zusammengewalzt. Nach dem Trocknen schließt sich ein Brennvorgang bei 1600°C an. Der so hergestellte Verbundwerkstoff wies zwar nur eine Biegefestigkeit von 75 N/mm² auf, jedoch ergab sich eine im Vergleich zu einer monolithischen Ausbildung verbesserte Bruchzähigkeit.

### Beispiel 3:

Aus einem Al₂O₃-Pulver wird ein kontinuierliches Band mit den Abmessungen 50 x 1 mm² gewalzt und, ähnlich wie in Figur 2 dargestellt, auf eine Walze 7 aufgewickelt. Das Aufwickeln geschieht unter Druck im Walzspalt zwischen den Walzen 7 und 8. Danach wird das aufgewickelte Band aufgeschnitten und ausgebreitet. Wenn kleinere Abmessungen gewünscht werden, ist es möglich, Platten durch einen Stanzvorgang herzustellen, die dann wiederum getrocknet und gebrannt werden können. Mit der Erhöhung der Anzahl der Schichten im Verbundwerkstoff ist allgemein auch eine Erhöhung der Biegefestigkeit des Verbundwerkstoffs verbunden.

### Beispiel 4:

In zwei Walzenpaaren, ähnlich wie sie anhand der Walzen 4 und 5 in Figur 1 dargestellt sind, werden kontinuierlich zwei Al₂O₃-Bänder mit den Abmessungen 50 x 1 mm² gewalzt. Zwischen diesen beiden Bändern bzw. Schichten 1 und 6 wurde kontinuierlich eine Metallfolie 9 mit einer Wanddicke von 200 µm eingeführt. Die drei Schichten werden zusammengebracht und mit einem Walzenpaar 7, 8 zu einem Verbundwerkstoff gewalzt. Über eine nachgeschaltete Stanzvorrichtung können einzelne plattenartige Körper ausgestanzt werden. Nach dem Trocknen und Brennen in Argonatmosphäre bei etwa 1350°C entsteht ein Verbundwerkstoff mit verbesserter Bruchzähigkeit. Wenn die Metallfolie 9 mit Lochungen 13 versehen ist, werden die beiden Schichten 1 und 6 besser miteinander verbunden und in den Verbindungsbereichen auch zusammengesintert, wodurch die Festigkeit des Verbundwerkstoffs 10 erhöht wird.

### Beispiel 5:

Es werden kontinuierlich zwei Schichten 1 und 6 aus SiC gewalzt und zusammengeführt. Eine Mittellage wird dabei aus Kohlenstoffaserbündeln erstellt. Die drei Schichten werden zusammengewalst.

### Beispiel 6:

Ähnlich dem Beispiel 4 werden kontinuierlich zwei Schichten 1 und 6, hier jedoch aus ZrO₂ gewalzt. Als Mittellage wird ein Gewebe aus Kohlenstoffasern eingebracht.

### Bezugszeichenliste:

- 1 =: Schicht
- 2 =: Trichter
- 3 =: Förderschnecke
- 4 =: Walze
- 5 =: Walze
- 6 =: Schicht
- 7 =: Walze
- 8 =: Walze
- 9 =: Metallfolie
- 10 =: Verbundwerkstoff
- 11 =: Gewebebahn
- 12 =: Pfeil
- 13 =: Lochungen

## Patentansprüche

1. Verfahren zur Herstellung eines Verbundwerkstoffs aus mindestens zwei Schichten, von denen mindestens eine Schicht aus keramischer Masse besteht, indem die Roh- und Zuschlagsstoffe für die Schicht aus keramischer Masse angefeuchtet, gemischt und zu einer Grünschicht gepreßt werden, an der Grünschicht schwache Grenzflächen gebildet werden und die Schichten des Verbundwerkstoffs zusammengepreßt werden, wonach der Verbundwerkstoff durch Trocknen und Brennen gestaltverfestigt wird, **dadurch gekennzeichnet,** daß die Grünschicht zur Bildung der schwachen Grenzflächen durch Walzen verdichtet und im Bereich ihrer Oberflächen texturiert wird, und daß das Zusammenpressen der Schichten des Verbundwerkstoffs durch einen weiteren Walzvorgang erfolgt.

2. Verfahren nach Anspruch 1, **dadurch gekennzeichnet,** daß die keramische Masse der Grünschicht mit einer Feuchtigkeit von 0 bis 15 Gew.-% - vorzugsweise von 0,5 bis 8 Gew.-% - eingestellt wird.

3. Verfahren nach Anspruch 1 oder 2, **dadurch gekennzeichnet,** daß die keramische Masse mit einem Schüttgewicht von mindestens 1,3 g/cm³ bei einer Körnung von 0 bis 1 mm eingesetzt wird.

4. Verfahren nach einem oder mehreren der Ansprüche 1 bis 3, **dadurch gekennzeichnet,** daß die Grünschicht mit einem höheren Druck gewalzt wird, als er beim Zusammenpressen der Schichten zu einem Verbundwerkstoff Anwendung findet.

5. Verfahren nach einem oder mehreren der Ansprüche 1 bis 4, **dadurch gekennzeichnet,** daß eine Mehrzahl Grünschichten zusammengefügt werden.

6. Verfahren nach einem oder mehreren der Ansprüche 1 bis 5, **dadurch gekennzeichnet,** daß das Zusammenfügen der Schichten unter Schichtdickenverringerung stattfindet.

7. Verfahren nach einem oder mehreren der Ansprüche 1 bis 6, **dadurch gekennzeichnet,** daß eine Schicht aus einer Metallfolie, aus einem Gewebe oder aus Fasern in den Verbundwerkstoff eingebracht wird.

8. Verfahren nach einem oder mehreren der Ansprüche 1 bis 7, **dadurch gekennzeichnet,** daß eine Mehrzahl von Grünschichten aus zwei Komponenten Verwendung findet, die in einem solchen Aufbau zusammengefügt werden, daß sich schichtenweise die eine Komponente in ihrem mengenmäßigen Anteil verringert, während gleichzeitig sich der Anteil der anderen Komponente mengenmäßig erhöht.

9. Verfahren nach einem oder mehreren der Ansprüche 1 bis 8, **dadurch gekennzeichnet,** daß das Zusammenpressen der Schichten des Verbundwerkstoffs bei erhöhter Temperatur durchgeführt wird.

10. Verfahren nach einem oder mehreren der Ansprüche 1 bis 9, **dadurch gekennzeichnet,** daß die Schicht des Grünkörpers aufgewickelt, durch einen Schnitt unterteilt und die so gebildeten Schichtabschnitte durch Walzen zusammengepreßt werden.

## Claims

1. Process for the production of a composite material comprising at least two layers, of which at least one layer is composed of ceramic material, by moistening the raw materials and aggregates for the layer of ceramic material, mixing them and pressing them to form a green layer, forming weak contact surfaces at the green layer and pressing the layers of the composite material together, after which the composite material is shape-consolidated by drying and firing, **characterized in that** the green layer is compacted and, in the region of its surfaces, textured by rolling to form the weak contact surfaces, and in that the layers of the composite material are pressed together by a further rolling operation.

2. Process according to claim 1, **characterized in that** the ceramic material of the green layer is adjusted with a moisture content of 0 to 15 % by weight, preferably of 0.5 to 8 % by weight.

3. Process according to claim 1 or 2, **characterized in that** the ceramic material is used with a bulk density of at least 1.3 g/cm³ with a particle size of 0 to 1 mm.

4. Process according to one or more of claims 1 to 3, **characterized in that** the green layer is rolled with a pressure higher than used in pressing the layers together to form the composite material.

5. Process according to one or more of claims 1 to 4, **characterized in that** a plurality of green layers are combined.

6. Process according to one or more of claims 1 to 5, **characterized in that** the layers are combined with a reduction in the layer thickness.

7. Process according to one or more of claims 1 to 6, **characterized in that** one layer composed of a metal foil, of a fabric or of fibres is introduced into the composite material.

8. Process according to one or more of claims 1 to 7, **characterized in that** a plurality of green layers comprising two components are used which are combined in a structure such that one component decreases layer by layer in its quantitative proportion, whereas the proportion of the other component increases quantitatively at the same time.

9. Process according to one or more of claims 1 to 8, **characterized in that** the layers of the composite material are pressed together at elevated temperature.

10. Process according to one or more of claims 1 to 9, **characterized in that** the layer of the green body is wound up and subdivided by a cut, and the layer portions formed in this way are pressed together by rolling.

## Revendications

1. Procédé de fabrication d'un matériau composite fait d'au moins deux couches, dont une couche au moins est constituée d'une masse céramique, en ce que les matières premières et les produits d'addition pour la couche en masse céramique sont humidifiés, mélangés et pressés en une couche crue, sur la couche crue sont formées des surfaces limites de faible épaisseur et les couches du matériau composite sont pressées ensemble, après quoi le matériau composite est consolidé dans sa forme par séchage et cuisson, caractérisé en ce que la couche crue est compactée par des rouleaux pour la formation des surfaces limites de faible épaisseur et est texturée dans la zone de ses surfaces, et en ce que le pressage ensemble des couches du matériau composite s'effectue par une opération supplémentaire de laminage.

2. Procédé selon la revendication 1, caractérisé en ce que la masse céramique de la couche crue est réglée sur une humidité de 0 à 15 % en poids - de préférence de 0,5 à 8 % en poids -.

3. Procédé selon la revendication 1 ou 2, caractérisé en ce que la masse céramique est utilisée avec une densité apparente d'au moins 1,3 g/cm³ pour une granulométrie de 0 à 1 mm.

4. Procédé selon une ou plusieurs des revendications 1 à 3, caractérisé en ce que la couche crue est laminée avec une pression supérieure à celle qui est appliquée pour le pressage ensemble des couches en vue d'obtenir un matériau composite.

5. Procédé selon une ou plusieurs des revendications 1 à 4, caractérisé en ce qu'une pluralité de couches crues est assemblée.

6. Procédé selon une ou plusieurs des revendications 1 à 5, caractérisé en ce que l'assemblage des couches s'effectue avec une réduction de l'épaisseur de couche.

7. Procédé selon une ou plusieurs des revendications 1 à 6, caractérisé en ce qu'une couche faite d'une feuille métallique, d'un tissu ou de fibres est introduite dans le matériau composite.

8. Procédé selon une ou plusieurs des revendications 1 à 7, caractérisé en ce qu'on utilise une pluralité de couches crues faite de deux composants, qui sont assemblés en une construction telle que dans une couche, un composant est réduit dans sa proportion en quantité, tandis qu'en même temps la proportion des autres composants est augmentée en quantité.

9. Procédé selon une ou plusieurs des revendications 1 à 8, caractérisé en ce que le pressage ensemble des couches du matériau composite s'effectue à température accrue.

10. Procédé selon une ou plusieurs des revendications 1 à 9, caractérisé en ce que la couche du corps cru est enroulée, partagée par une coupe et les portions de coupe ainsi formées sont pressées ensemble par laminage.
